(19) Europäisches Patentamt
European Patent Office
Office européen des brevets

(11) **EP 2 413 612 B1**

(12) **EUROPEAN PATENT SPECIFICATION**

(45) Date of publication and mention
of the grant of the patent:
**25.02.2015 Bulletin 2015/09**

(51) Int Cl.:
***H04N 17/00*** *(2006.01)*

(21) Application number: **10171454.1**

(22) Date of filing: **30.07.2010**

(54) **Methods and apparatuses for temporal synchronization between the video bit stream and the output video sequence**

Verfahren und Vorrichtungen zur zeitlichen Synchronisation zwischen einem Videobitstrom und der Ausgangsvideosequenz

Procédés et appareils pour la synchronisation temporelle entre le flux de bits vidéo et la séquence vidéo de sortie

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**01.02.2012 Bulletin 2012/05**

(60) Divisional application:
**15151227.4**
**15151228.2**

(73) Proprietor: **Deutsche Telekom AG**
**53113 Bonn (DE)**

(72) Inventors:
• **Argyropoulos, Savvas**
**10585 Berlin (DE)**

• **Feiten, Bernhard**
**13437 Berlin (DE)**
• **Garcia, Marie-Neige**
**10249 Berlin (DE)**
• **List, Peter**
**64859 Eppertshausen (DE)**
• **Raake, Alexander**
**10405 Berlin (DE)**

(74) Representative: **Vossius & Partner**
**Siebertstrasse 3**
**81675 München (DE)**

(56) References cited:
**WO-A1-2008/034632     US-A1- 2003 179 740**
**US-A1- 2009 262 198     US-B1- 6 618 077**

**Description**

Filed of the Invention

The invention relates to methods and apparatuses for temporally synchronizing the encrypted video bit stream of an external video decoder with the processed video sequence provided by this external video decoder.

Background of the Invention

The proliferation of video communication applications over the last years has necessitated the development of robust video quality measures to assess the Quality of Experience (QoE), defined as the service quality perceived by the user. The assessment of video quality is a critical aspect for the efficient designing, planning, and monitoring of services (e.g. Internet Protocol Television - IPTV) by the content providers.

Nowadays, hybrid video quality assessment systems employ a combination of packet information, bit stream information and the video sequence that is generated by an external video decoder, e.g. the video sequence decoded by a set-top-box (STB) and displayed in the user's display device. In general, in a hybrid video quality assessment algorithm the features extracted or calculated from the bit stream (e.g., motion vectors, macroblock types, transform coefficients, quantization parameters, etc.), and the information extracted by packet headers (e.g., bit rate, packet loss, delay, etc.) are combined with the features extracted in the pixel domain from the video sequence which is generated by an external video decoder. However, in many applications, the transmitted video bit stream is encrypted due to copyright issues and the decryption key is only included in a hardware device (typically the STB of the end user). Therefore, the quality assessment models can not access the packet payload and the related features from the elementary stream (ES) which is encapsulated into the packets; instead, they use information extracted from packet headers, i.e., transport stream (MPEG-2 TS), Real-Time Transport Protocol (RTP), or packetized elementary stream (PES) headers, depending on the level of encryption. Such models, called parametric or packet-header-based models, do not explicitly address aspects such as the source quality or the encoder and player implementations. Parametric audio, video, and audiovisual quality models are currently developed and standardized in ITU-T Study Group 12 under the provisional name P.NAMS.

It is evident that the features extracted from the packet headers need to temporally correspond to the features extracted from the video sequence obtained by the external video decoder, otherwise, due to loss of temporal synchronization the assessment of the perceived video quality would not be accurate. Thus, the first step in every hybrid video quality assessment algorithm is the synchronization of the (encrypted) video bit stream with the video sequence obtained by the external video decoder.

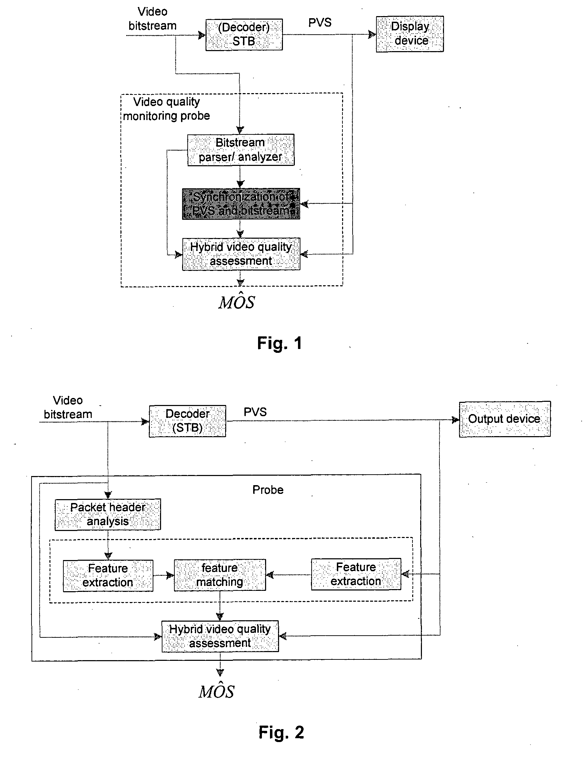

A block diagram of a hybrid video quality assessment system is depicted in Fig. 1. The external decoding device, e.g., the STB at the end-user's side, decodes the received bit stream and generates the processed video sequence (PVS) which is displayed by the output device (typically a TV-set or a monitor). Note, that the STB can decode the input encrypted bit stream since it contains the required decryption key. In parallel, a probe device captures the incoming encrypted bit stream, and then parses and analyses it in order to extract and compute quality-related features from the analysis of the packet headers. The probe device incorporates a module for the temporal synchronization between the input bit stream and the video sequence obtained from the external video decoder. This synchronization information is employed from the video quality assessment algorithm (along with the input bit stream features and the PVS features) within the probe device to assess the quality of the video sequence and compute an objective estimate of the Mean Opinion Score (MOS).

In the following, the term "Processed Video Sequence" (PVS) will denote the video sequence which is generated by the external video decoder. In general, the main reasons for the temporal asynchrony between the bit stream and the PVS are the delay and the packet losses that may occur during the transmission of the video bit stream over a network. When the video stream is transmitted over a best-effort network, such as the Internet, the arrival time of each packet is not constant and may vary significantly. The variability over time of the packet latency across a network is called *jitter.* To ensure a smooth playback of the sequence without jerkiness, most video systems employ a de-jitter buffer. The received bit stream is written to the input buffer based on the arrival time of each packet, and the picture data corresponding to a frame are read out of it into the decoder at predetermined time intervals corresponding to the frame period. The display timing of each picture is determined by the timestamp field recorded in the packet header. That is, the timestamp value corresponds to the delay time period which elapses from the detection of the picture start code until the picture display timing.

In the above described video decoding system, the display timing of each video picture is determined according to the data which are included in the video bit stream for the determination of the display timing. Since the display time of a picture is not fixed, the PVS can not always be matched exactly to the original bit stream. Moreover, the PVS is generated by an external video decoder (which is, for example, integrated into the STB or the display device of the viewer) which is not part of the video quality assessment system and has unknown properties and functionality since it is typically provided by a third party.

In the literature, the problem of temporal synchronization between a source and a distorted video sequence has been previously studied and is also referred to as video registration. In M. Barkowsky, R. Bitto, J. Bialkowski, and A. Kaup, "Comparison of matching strategies for temporal frame registration in the perceptual evaluation of video quality, Proc. of the Second International Workshop on Video Processing and Quality Metrics for Consumer Electronics, Jan. 2006 , a comparison between block matching and phase correlation for video registration is presented and examined in terms of performance and complexity. Also, a frame-matching algorithm to account for frame removal, insertion, shuffling, and data compression was presented in Y. Y. Lee, C. S. Kim, and S. U. Lee, "Video frame-matching algorithm using dynamic programming," Journal of Electronic Imaging, SPIE, 2009, based on the minimization of a matching cost function using dynamic programming. In J. Lu, "Fast video temporal alignment estimation," (US-B1-6 751 360), a fast temporal alignment estimation method for temporally aligning a distorted video with a corresponding source video for video quality measurements was presented. Each video sequence is transformed into a signature curve by calculating a data-point for each frame as a cross-correlation between two subsequent frames. The temporal misalignment of the distorted video is then determined by finding the maximum value of the normalized cross-correlation between the signature curves of the examined video sequences. Another method for identifying the spatial, temporal, and histogram correspondence between two video sequences is described in H. Cheng, "Video registration based on local prediction errors," (US-B2-7 366 361). The PVS is aligned to the reference video sequence by generating a mapping from a selected set of one or more original frames to the processed set so that each mapping minimizes a local prediction error. In K. Ferguson, "Systems and methods for robust video temporal registration," (US-A-2008/0253689), frame and sub-image distillation measurements are produced from the reference and test video sequences. Then, they are linearly aligned using local Pearson's cross-correlation coefficient between frames. Additionally, in C. Souchard, "Spatial and temporal alignment of video sequences," (US-A-2007/0097266), a motion function is defined to describe the motion of a set of pixels between the frames of the test and the reference video sequence and a transform is used to align the two images.

In J. Baina et al, "Method for controlling digital television metrology equipment", US 6,618,077 B1, 2003, a method for the extraction of parameters from an MPEG-2 Transport Stream is proposed to generate synchronisation signals. However, this method is only applicable when the video elementary stream is packetized in a MPEG-2 Transport Stream and cannot be applied to an arbitrary transportation protocol. Contrary to that, the proposed method can be applied to any video bit stream without the need for a specific transportation or application protocol. Moreover, the above mentioned method by Baina et al. provides synchronization signals to a video quality monitoring algorithm to indicate which pictures (video frames) of the video signal should be used for the quality prediction. In contrast to that, the method proposed here identifies the part of the bit stream (and the features extracted from it) that correspond to each picture under consideration in the video sequence obtained from an external video decoder. Finally, the method by Baina et al. does not exploit the encrypted bitstream information to synchronize the video bit stream with the picture from the external video decoder, whereas the proposed invention exploits the encrypted bit stream (and the features extracted therefrom) to perform the synchronisation. The exploitation of the video bit stream enables the consideration of the effects from packet losses and can be applied in case of transmission errors.

Another method for the alignment of two data signals was presented in "M. Keyhl, C. Schmidmer, and R. Bitto, Apparatus for determining data in order to temporally align two data signals, WO 2008/034632 Al, 2008. This method performs the alignment of the two signals in the pixel domain, which is not applicable in the case of encrypted bit streams since the probe device can not decrypt and decode the input bit stream to generate the reconstructed signal in the pixel domain. Moreover, the proposed invention provides synchronisation between the pictures from an external video decoder and the encrypted input video bit stream to identify the part of the bit stream that corresponds to the specific part of the video sequence under consideration for video quality assessment. As mentioned above, the exploitation of bit stream features in the proposed method in the present invention enables the consideration of the effects of network degradations that can impact the quality of the displayed video sequence.

Yet another method for synchronising digital signals was presented in "J. Baina et. al, "Method for synchronising digital signals", US 2003/0179740 Al, 2003. It is a full-reference method, i.e. the reference signal is required to perform the synchronisation. Contrary to that, the present invention proposes a no-reference method for the synchronization between a video bit stream and the decoded pictures from an external video decoder, thus, the reference signal (video sequence) is not necessary. Moreover, the above mentioned method requires the extraction of parameters from the ES of bit streams for the synchronization and, therefore, cannot be applied in case of encrypted bit streams. In contrast, the method in the present invention describes a method for the synchronization of an encrypted bit stream with the PVS obtained by an external video decoder.

It must be noted that in the following, the terms "frame" and "picture" will be used interchangeably and will denote a picture (which can be either a frame or a field) of the PVS.

Summary of the Invention

It is the object of the invention to provide a method and apparatus to temporally synchronize the input encrypted video bit stream of a video decoder, e.g. a STB, with the PVS from an external video decoder and enable their synchronization. This object is achieved with the features of the claims. The synchronization information can be used, for example, in a hybrid video quality assessment algorithm to ensure that the extracted bit stream features temporally correspond to the specific displayed pictures during the time window measurement for which the perceived viewer quality is assessed.

The invention provides a method for temporally synchronizing the encrypted input bit stream of a video decoder with the processed video sequence generated by an external video decoder, the method comprising the steps of:

a) capturing and supplying the encrypted input bit stream to a bit stream analysis module;
b) analysing, in the bit stream analyser module, the packet header information of the encrypted input bit stream, and calculating the size and the type of the frames contained in the bit stream;
c) extracting, on the basis of the calculated frame sizes and types, features that are representative of the content depicted in the video frames;
d) extracting the type of content and respective features representative of the content from the pictures of the processed video sequence;
e) comparing the features extracted in step d) from the current picture of the processed video sequence with the features extracted in step c) from the analysed frames to find the part of the encrypted bit stream which matches the current picture of the PVS under examination.

The method may further comprise the step f) of supplying the picture of the PVS and its corresponding part of the bit steam to a video quality assessment unit. The video quality assessment unit may estimate a subjective quality score based on the obtained information from the bit stream and the processed video sequence..

Step b) may further detect frames that have been affected by the packet loss, and may further comprise the steps of:

g) examining the current picture of the processed video sequence for artefacts generated due to packet losses; and
h) matching of the processed video sequence with the corresponding frame of the bit stream, wherein, if the current picture of the processed video sequence was detected in step g) to contain artefacts that were inserted as a result of a packet loss, then that picture is matched with the part of the bit stream corresponding to the frame which was found in step b) to contain the packet loss.

According to a further aspect, the invention provides an apparatus for temporally synchronizing the encrypted input bit stream of a video decoder with the processed video sequence obtained by an external video decoder, the apparatus comprising:

a bit stream analyzer receiving the encrypted input bit stream, the bit stream analyzer being configured for parsing and analyzing the input bit stream, and
a synchronization module being configured for synchronizing the analyzed bit stream with the processed video sequence,
characterized in that
the synchronization module comprises

an first extraction module being configured for extracting, on the basis on the calculated frame sizes and types, features that are representative of the content depicted in the video frames,
a second extraction module being configured for extracting the type of content and respective features representative of the content from the pictures of the processed video sequence, and
a comparison unit connected to the first extraction unit and the second extraction unit, the comparison unit being configured to

compare the features extracted from the current picture of the processed video sequence with the features extracted from the analysed frames, and to
determine the part of the encrypted bit stream which matches the current picture of the PVS under examination.

Coming back to the object of the invention, it can be achieved in general terms by the provision of a device (probe) which, according to the present invention, includes a bit stream analyzer for parsing the input bit stream, a synchronization module which is responsible for temporally synchronizing the bit stream with the PVS.

The device which is responsible for the temporal synchronization of the video bit stream and the PVS comprises of a buffer which stores the extracted features of the analyzed bit stream. This buffer should be able to store a specific number of such features (extracted from the encrypted input bit stream) corresponding to a number of pictures $N_{dec}$ so that the features extracted from the current picture of the PVS under examination can be compared to this specific number of previously extracted features.

The module which is responsible for the synchronization of the PVS and the video bit stream performs the following operations:

   a) compares the features extracted from the PVS with the features extracted from each one of the images in the buffer
   b) computes a distance metric between the features from the PVS and the extracted features in the buffer by exploiting information extracted from the packet headers
   c) determines the best matching image in the video buffer and outputs it (along with its extracted features) to the video quality assessment module which is responsible for estimating the video quality based on information from the bit stream and the PVS.

In the following, the invention will be described in more detail.

Firstly, an embodiment of temporal synchronization between the bit stream and the PVS will be described with reference to Fig. 2.

The temporal synchronization between the bit stream and the processed video sequence consists of two steps. Initially, in the first step, the apparatus according to the invention, i.e. a probe device, captures the bit stream and feeds it to the bit stream analyser which extracts the following information for each picture:

   a. the frame type and the size of the each picture of the video sequence based on packet header information
   b. the packets that have been lost due to transmission errors and the corresponding areas within each frame that have been affected by the packet loss; and
   c. features that are representative of the content of each picture

In the second step, representative features of the content that is depicted in the pictures of the processed video sequence are extracted, and subsequently compared with the features extracted from the encrypted bit stream. The purpose of this comparison is to identify matching frames in the encrypted bit stream (and the packets which convey the information of this frame) that matches the current pictures of the PVS under examination so that the features of the bit stream and the PVS can be temporally aligned.

Finally, a hybrid video quality assessment module which combines information from the encrypted bit stream and the PVS is employed to estimate the quality of the displayed video sequence.

Synchronisation based on frame-based feature matching

The first embodiment of the method for synchronization between the encrypted video bit stream and the decoded image (PVS) which is captured from an external video decoder addresses the case where there are no packet losses in the bit stream and is shown in Fig. 2.

In the first step, the video bit stream is fed to a module which is responsible for the analysis of the packet header information, and the calculation of the size and the type of the frames (intra, predictive, or bi-predictive). The method for the extraction of the type of frames of encrypted video based on their size is not claimed as an invention in the present patent. For example, the method proposed in EP 2 413 535 A1 of the present applicant filed on July 30, 2010 could be used. Details thereof are given in Annex 1 to this description.

In the second step, the information about the frame sizes and types is used in order to extract (for example time-varying) features that are representative of the content depicted in the video frames. It is obvious, that since the payload information is not available due to encryption, only an approximation of the content class can be estimated. The method for content class estimation based on frame sizes and frame types is not claimed as an invention in the present patent. Any available method for this purpose could be used, e.g., A. Clark, "Method and system for content estimation of packet video streams," WO 2009/012297 A1. Details of this method are given in Annex 2 to this description.

Similarly, the type of content and respective (e.g. time-varying) features representative of the content are extracted from the pictures of the processed video sequence. Since the present invention focuses only on the synchronization aspects between the bit stream and the processed video sequence, the method for the extraction of features from the picture (in the pixel domain) and the detection of content type is not within its scope.

In the third step, the features extracted from the current picture of the processed video sequence are matched with the features extracted from the frames which were analysed by the packet header analysis module. Note that the corresponding feature and synchronisation information about the part of the bit stream which corresponds to the current PVS under examination can be used as input to the module which is responsible for the assessment of video quality. As shown in Fig. 2, a hybrid video quality assessment module may be present which combines information from the bit stream and the processed video sequence to evaluate the quality of the video sequence.

Temporal synchronisation based on packet loss event triggering

In this embodiment of the present invention, it is assumed that the bit stream and the processed video sequence are synchronized when no errors (e.g., due to packet losses) occur, based on the method described in the previous subsection and it considers the case when synchronization is required when a packet loss is detected.

In the first step, the video bit stream is fed to the module which is responsible for the analysis of the packet header information, the calculation of the frame types, and the detection of the frames that have been affected by the packet loss. The type of all the frames is detected and thus it is determined whether a packet loss propagates to its subsequent frames or not due to the prediction process.

In the following step, the current picture of the processed video sequence is examined for distortions that may have been generated due to packet losses. It must be noted that this algorithm should be able to classify between distortions caused by packet losses and distortions that were produced as a result of the lossy compression of the original video sequence. The algorithm for the detection and classification of distortions is out of the scope of the present invention. For example, the method in G. Valenzise et. al., "Estimating channel-induced distortion in H.264/AVC video without bitstream information," QoMEX, 2010, could be used for this purpose.

In the third step, the matching of the processed video sequence with the corresponding frames of the bit stream is performed. If the current pictures of the processed video sequence were detected to contain distortions that were caused as a result of a packet loss, then that sequence of pictures is matched with the part of the bit stream corresponding to the frames which were found (in the initial step) to contain the packet loss degradations. At this step, the matching may not be necessarily performed on a picture basis, but rather on the basis of matching the sequence of erroneous frames with their corresponding part of the bit stream. This will enable a more accurate estimation since it considers the effect of temporal propagation of errors based on the frame types.

Finally, the synchronization information (that is, the current frame of the PVS along with its corresponding part of the video bit stream) is computed. This information can be forwarded as input to the module which is responsible for the assessment of video quality.

The prior art mentioned in the above introductory part considers the problem of temporal synchronization between two video sequences due to frame skipping, repetition, deletion, shuffling, and data compression that may result due to the transmission of the video sequence over an erroneous network or the processing of the sequence. On the contrary, the present invention considers the synchronization of the processed video sequence with the encrypted bit stream, e.g. at the end-user side, and, thus, the only sources of asynchrony are the delay introduced by the decoder device and the bit stream analyzer and the different error concealment techniques applied by the external decoder (STB) and the decoder within the probe device upon the detection of packet losses in the input bit stream. Moreover, the exploitation of the bit stream and the respective feature extraction enables the consideration of the effects of packet losses for the synchronization.

Fig. 1     shows a conventional probe device for temporal synchronisation of the encrypted input bit stream and the video sequence obtained by an external video decoder;

Fig. 2     shows synchronization between the encrypted bit stream and the decoded image obtained by an external video decoder, based on the extraction of features from both the bit stream and the PVS, in accordance with a preferred embodiment of the invention.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

<u>**Annex 1**</u>

**Method for the extraction of the type of frames of encrypted video based on their size (Citation from paragraphs [0013] to [0021] and [0026] to [0061] of EP 2 413 535 A1)**

A method for estimating the type of the Group of Picture structure, GoP, of a plurality of video frames in a video stream, may comprise the steps of:

a. capturing the frame sizes in byte of every video frame subsequent to an initial Intra-frame, I-frame, to obtain an array of frame sizes;
b. converting, after a number of frames, the array of frame sizes obtained in step a) into an array of zeros and ones, where zero stands for small frames size, as assumed for bidirecional frames, B-frames, and one stands for large frame sizes, as assumed for predicted frames, P-frames;
c. matching the array of zeros and ones obtained in step b) to a number of predefined patterns of binaries, said predefined patterns of binaries depicting possible GoP structures;
d. converting the result of said matching in step c) to form a single score value; and
e. determining the particular pattern of the number of predefined patterns of binaries having the best score value, according to a predefined metric.

In step a), the boundaries of video frames in the bitstream may be detected by either observing the changes in certain timestamps of the transport layer, or by certain bits in the header structures that are used to signal new frames and decide Intra-frames from other frames.

It is preferred that in step b) the number of frames comprises all frames until the next I-frame.

In step b) the conversion of the continues frame sizes to binaries preferably comprises the usage of a reference value that is dependant on constant or slowly fluctuating features, or a dynamically adaptive reference value, which are preferably dependent on the values of previously captured frame sizes and/or other dynamic features.

The predefined basic patterns of binaries depict possible GoP structures for different numbers of consecutive B-frames in frame based coding, field based coding, open GoP coding, or closed GoP coding.

It is preferred in step c) that the short predefined basic patterns are repeated with a possible truncation of the last basic pattern until the series of repeated basic patterns has the same length as the series of binarized frame sizes in the array of frame sizes.

Furthermore, in step c) the matching may be performed by an element wise exclusive nor operation, wherein in step d) the results of every exclusive nor is added up to form the score value, and wherein in step e) the score value metric corresponds to the maximum value.

According to an embodiment, in step e) for the pattern having the best score value the associated GoP-structure, field/frame status and open GoP/closed GoP status are selected as estimation result for the GoP-pattern of the current GoP.

Preferably, for subsequent GoPs either new series of frame sizes are captured, or any kind of GoP averages are being used by averaging frame sizes of previous and current arrays of frame sizes.

After the estimation of the GoP-pattern a further frame type classification is perfonned, wherein every set of consecutive B-frames between two P-frames that consists of at least 3 B-frames is further examined as to whether the frame sizes according to the output of step a) at those positions in said sets that may contain reference B-frames are significantly larger than at all the other positions of B-frames in said sets, wherein, if this is the case for an adequate number of said sets of B-frames in the array of frame sizes, said frames are indeed assumed to be reference B-frames and the estimated GoP-structure is assumed to be a GoP-structure of a so called hierarchical coding sequence.

The method will be described in the following in more detail.

In a first step, the number of bytes for each video frame is estimated or calculated. Different methods may be appropriate to perform this task. For instance, the changes in certain timestamps in the transport layer can be exploited to detect the beginning of new frames, or certain bits in the header structures that are used to signal new frames may be utilized. In general these bit stream properties are available even in encrypted bit streams. Therefore, the fame sizes can either be calculated byte exact, or estimated well enough to perform the following steps.

In a second step, the video bit stream is scanned until the next I-frame is found, which represents the start of the next GoP.

In non-encrypted streams, the next I-frame (as all of the frame types) can be found by looking into the video-frame header. In encrypted streams, or if frame boundaries appear somewhere at unknown points within the payload, certain flags can be accessed instead, that mark I-frames as "random access points". If for some reason theses flags do not appear, still an analysis of encountered frame sizes can be used to detect I-frames, since their size is in general much bigger than those of P and B-frames.

In a third step, the sizes in byte of all subsequent video frames until the next I-frame will be captured in certain arrays until the next I-frame is encountered and therefore the GoP is completed.

In a fourth step these arrays will be matched to a number of predefined patterns that represent typical GoP structures. The best match is associated to a specific GoP structure which will in later steps serve as prototype for following GoPs and can therefore enable an easy a priori estimation of frame types of incoming frames.

For subsequent GoPs, the array of frame sizes may be reset, so that only data of the current GoP is used, or the frame sizes of a certain number of previous GoPs may be added up to obtain averaged values. In the latter case an additional array may be needed to note the number of frame size values added up in the elements of the array. Preferably, moving averages may be calculated, by applying:

$$for(\ all\ frames\ n\ within\ the\ current\ GoP\ )$$

$$FrameSizeArray[n] = (M-1)/M * FrameSizeArray[n] + 1/M * FrameSize[n]$$

where M is the number of GoPs to be averaged.

Different weighting schemes may be used.

**Possible GoP Patterns**

As stated above, a GoP usually has a specific structure that is composed of a certain sequence of P- and B-frames between the two I-frames which mark the boundaries of the GoP. Examples for typical GoP-structures are:

I, b, b, P, b, b, P, b, b, P .... (the "classical" GoP-structure known from MPEG2)

I, b, B, b, P, b, B, b, P, b, B, b, P (possible GoP-structure for hierarchical encoding, with B = reference B-frame b = non reference B-frame)

It has to be taken into account that interlaced video is often encoded as "field sequence" comprising: two independent fields for one video frame. In that case the above structures would look like:

I/P, b/b, b/b, P/P, b/b, b/b, P/P....
I/P, b/b, B/B, b/b, P/P, b/b, B/B, b/b, P/P....

forming distinct patterns that, if correctly detected, allow the decision between frame and field encoding even in encrypted streams. It is noted here that in field sequences often times only the first field of a key frame is actually coded as intra field. The second field of the key-frame may be a predicted field. In the above notation this would result in a I/P frame. Even P/I frames are possible.

The patterns above are visualized in "display order". In fact, the frames are transmitted in a different order, the so called "bit stream order" or "decoding order". Since B-frames have references in the past and the future, these future references have to be transmitted in advance resulting in a bit stream order as shown below:

$I_0$, $P_1$, $b_2$, $b_3$, $P_4$, $b_5$, $b_6$, $P_7$, $b_8$, $b_9$ ... bit stream order
$I_0$, $b_2$, $P_1$, $b_5$, $b_6$, $P_4$, $b_8$, $b_9$, $P_7$, ... display order (with bit stream order index)

$I_0$, $P_1$, $b_3$, $b_4$, $P_5$, $B_6$, $b_7$, $b_8$, ... bit stream order
$I_0$, $b_3$, $B_2$, $b_4$, $P_1$, $b_7$, $B_6$, $b_8$, $P_5$, ... display order (with bit stream order index)

Even for the same GoP-structure different patterns are possible. This is because there are the techniques of "closed GoP transmission" and "open GoP transmission".

In closed GoPs, the transmission of the content of different GoPs never overlaps. In open GoP-structures the first 1-frame is transmitted before the B-frames receding it in display order (the ones that are closing the preceding GoP). The examples above were shown in closed GoP fashion. The same example in open GoP fashion would look like:

$\boldsymbol{b}_{-2}$, $\boldsymbol{b}_{-1}$, $I_0$, $b_2$, $b_3$, $P_1$, $b_5$, $b_6$, $P_4$, ... display order (open GoP)
$I_0$, $\boldsymbol{b}_{-2}$, $\boldsymbol{b}_{-1}$, $P_1$, $b_2$, $b_3$, $P_4$, $b_5$, $b_6$, ... bit stream order

$b_{-3}$, $B_{-2}$, $b_{-1}$, $I_0$, $b_3$, $B_2$, $b_4$, $P_1$, $b_7$, $B_6$, $b_8$, $P_5$ ... display order (open GoP)
$I_0$, $B_{-2}$, $b_{-3}$, $b_{-1}$, $P_1$, $B_2$, $b_3$, $b_4$, $P_5$, $B_6$, $b_7$, $b_8$ ... bit stream order

with the first two (three) B-frames (here marked in bold letters) belonging to the preceding GoP, which are transmitted after the I frame of the current GoP.

As can easily be seen, the bit stream order and therefore the resulting GoP-pattern differ in a distinct manner that, if correctly detected, allows the decision between closed GoP and open GoP sequences.

Other possible patterns include:

I, P, P, P, P .... (GoP-structure without B-frames like used in video conferencing and other low delay applications)
I, b, P, b, P, .... (GoP-pattern with only one B-frame)

It is within the scope of this method to estimate the GoP-structure of any analysed video stream, may it be fully readable, encrypted or corrupted by packet loss. The only information needed to achieve this goal is the sizes in byte of every encountered video frame and the knowledge which of the frames are of type I-frame.

## Calculation/estimation of frame sizes

As this method is based on the analysis of the byte sizes of all the frames in a video sequence, these sizes have to be extracted from the bit stream for every frame. There are many different transport schemes, which may require different actions to perform this task. The by far most important transport scheme on IP based networks is the "real time protocol" (RTP) however. Frame size extraction is therefore here described for RTP only but will work similarly for other transport schemes. The skilled person will be able to easily adopt the concept to any different transport scheme of his usage.

There are two major approaches to transmit video content over RTP:

- The video is carried directly as a payload of the RTP packets. In this case audio and other possible information ("system" information) is carried in different RTP-streams having different port numbers. Therefore the video portion of the bit stream can easily be separated from the rest of the packets.
  One video frame will in general consist of the payload of a number of RTP packets, each of which is carrying a timestamp. In the case of video, these RTP-timestamps are set to the relative decoding time of the video frame they carry. Since RTP packets can each have different sizes, a video frame will in general be in a number of complete RTP-packets. To calculate the size of a video fame in this case, only the payload sizes of all RTP-packets with the same timestamp have to be added up.
  Even if frame boundaries appear within a single RTP-payload, frame sizes can be estimated quite well by the above value. No access to the payload itself, which might be encrypted, is necessary.
  The RTP-sequence number, which is part of the RTP-header, can be accessed in order to detect RTP-packet losses. Since the size of a lost packet cannot be known, it needs to be estimated. This can be done by some kind of average size of past packets.
- Video is carned over RTP, but the payload is a "transport stream" (TS). In a TS, video, audio and other information is multiplexed into a single stream. Each of the multiplex packets have a size of 188 byte including the small TS-header. One RTP-packet carries 7 of these TS-packets, which are marked by the so called "program ID" (PID) as belonging to a specific sub stream. One of theses sub streams is the video to be analysed. Even in encrypted streams, the TS-headers are in general not encrypted and can therefore be accessed. They allow for an exact measurement of frame sizes. In case of RTP-packet losses, a so called "continuity counter" within the TS-header can be utilized to calculate the number of lost sub stream-packets separately for each sub-stream for the particular RTP-loss. Since TS-packets are much smaller than RTP-packets and (in absence of the rare case of stuffing) have the same payload size the number of lost bytes can be estimated more accurate. The mentioned continuity counter in the TS-header has only 4 bits. Therefore up to 16 missing TS-packets can be detected. Together with the known number of missing RTP packets and a value for the average number of TS-sub stream packets per RTP packet which can easily be calculated, an accurate estimation for lost TS-packets larger than 16 can be estimated.

Since the RTP timestamp is synchronized to the relative decoding time of the video frame they carry, even complete missing frames can be detected, because in such a case the RTP-timestamp would be incremented by more than one time difference between successive frames.

**Detection of I-frames**

In order to start analysis, the bit stream is scanned to find the beginning of the next I-frame which marks the beginning of a new GoP. I-frames can be detected by different means. In case of a non encrypted stream, the frame headers of the elementary stream may easily be accessed for all video-frames. Video frame headers explicitly contain the frame type.

If the video is carried directly as RTP-payload, frame-headers should always appear with the first byte in the payload of every RTP-packet coming after an RTP-packet with the M-bit of the RTP-header set to 1. If frame headers may appear as well within the payload of an RTP-packet, they can easily be searched for, because they contain a unique byte sequence.

In the case that TS over RTP is used, the so called "random_access_flag" within the adaptation-field of the TS-header can be exploited. It signals that the coming frame was coded as I-frame. Even in encrypted streams the adaptation field as part of the TS-header is usually not encrypted.

Once frame boundaries are known, 1-frames can also be detected empirically. Their average size is usually much bigger than those of P and B-frames.

Once the beginning of an I-frame is found, the beginning of the next GoP is found as well. From that point on the sizes of all subsequent frames are gathered in a number of possible ways. In the following description this gathering process is continued for a complete GoP until the analysis of the gathered data is started. In other embodiments the collecting period can have a different length.

Embodiment of data collecting and pattern matching

**One long array of frame sizes**

After the initial I-frame of the current GoP has been encountered, the frame sizes of all subsequent frames are stored into the elements of an array, with the index of the array equal to the number of frames past said I-frame. This is preferably done until the next I-frame is detected, signalling the end of the first GoP to be analysed. The so constructed array of frame sizes is the input to a pattern matching process that compares this array to a set of typical patterns, and outputs an estimated GoP-pattern and other data where applicable.

If the analysed bit stream is not encrypted, and therefore the frame types are known to the algorithm, the real frame sizes can be replaced by standardized values like '1' for non-reference B-frames, '2' for reference B-frames and '4' for P-frames, which serve the same purpose as the real frame sizes, but do not introduce any statistical uncertainty.

**Pattern matching**

In an embodiment, the array of frame sizes would be matched to binary patterns with '0' for B-frames and '1' for P-frames. The example GoP-structures above would therefore be matched to patterns like:

    0, 0, 1, 0, 0, 1 ... (I, b, b, P, b, b, P structure with open GoP)
    1, 0, 0, 1, 0, 0 ... (I, b, b, P, b, b, P structure with closed GoP)

    0, 0, 0, 1, 0, 0, 0, 1 ... (I, b, B, b, P, b, B, b, P structure with open GoP)
    1, 0, 0, 0, 1, 0, 0, 0 ... (I, b, B, b, P, b, B, b, P structure with closed GoP)

In this embodiment, the "array of frame sizes" would therefore be converted into a binary array as well. In the easiest case, a single reference value would be used to replace the values of every element of said array into '0' for "small sized frame(s)" and '1' for "large frame(s)". The reference value to decide between "large" and "small" could simply be the average of all elements multiplied by a factor > 1. In alternative embodiments the threshold could be the median value of all array elements or a weighted combination of the smallest and largest of the elements or other combinations of the array elements. Also the threshold could be adopted for a small number of frame size values. This could be accomplished by varying one of the described threshold values by a factor or an additive term or by calculating the threshold only from frame size values in a certain neighbourhood of the current value.

In general it may be reasonable not to use the first few values in the array because immediately after an I-frame P- and B-frames often times have irregularly small sizes.

**Matching process**

The length of a GoP is in general not known in advance. Typical values are one I-frame per every 1 or 2 seconds, resulting in a GoP length of for instance 25 to 50 frames (or 50 to 100 fields for "field coding" modes) for the typical frame rate of 25 frames / sec. Usually the encoder has a scene-cut detection and places an I-frame on every scene-cut position. Therefore, if scene-cuts are encountered, GoP's can have any size down to 2 or even 1 frame.

In contrast to overall length, the basic patterns of each of the possible GoP structures are constant and short (for instance 0,0,1 for the I, b,b,P,... example). For the purpose of matching with the elements of a complete GoP, these simple basic patterns have to be repeated until the actual GoP-size is reached.

In embodiments here only binary matching is applied, the matching process itself may be a simple "exclusive nor" operation on every element of the converted array of frame sizes with the concatenated basic pattern elements. The results of these "exclusive nor" operations are then added up to a matching score for the used pattern. This is done with all available predefined patterns.

The specific pattern, which gains the highest score number is considered the best match and its associated GoP-structure, frame/field-status, open/closed-status are than adopted for further analysis.

### Annex 2

### Method for content class estimation based on frame sizes and frame types (Taken from parapraphs [0012] to [0022] of WO 2009/012297 A1)

In the following, a method for the estimation of the content of frames in an encrypted packet video stream without decrypting the packets is described. The concept can also be used as an alternative method for estimating the content of unencrypted packet video streams.

The method works by first examining the packet headers to determine where a given frame begins and ends. (Because large frames are broken up into multiple packets it cannot be assumed that each frame is contained in a single packet.) A network analyzer can accomplish this task, for example, by examining the timestamp fields contained in the RTP (Real-time Transport Protocol) headers of the packets in the video stream. Packets with identical timestamps comprise a single frame.

Next, the analyzer classifies the frame observed within the interval as an I, P, or B-frame. For unencrypted video streams, the analyzer can simply read the frame type from the picture header. For encrypted video streams, the analyzer can read the frame type directly if it has the appropriate decryption key. Alternatively, the analyzer can estimate the type of the frame based on the size (in bytes) of the frame. As described earlier, I, P, and B frames are respectively large, medium, and small in relation to one another.

In implementations where the analyzer estimates the frame type based on the size of the frames, the network analyzer will begin by counting the number of bytes in the frame. It can do this by determining the size of the data payload in each packet and summing this value for all packets that comprise the frame. The analyzer will also estimate the size of any packets that were dropped and include this estimate in its overall byte count for the frame.

The analyzer can detect a dropped packet by examining the packet sequence numbers, for example the RTP sequence number, to find any gaps in the sequence. (Because packets can travel in a non-sequential order, the analyzer will have to maintain a list of recently observed sequence numbers. It can then classify a missing sequence number as dropped if it has not been seen after a sufficient length of time.) The analyzer can estimate the size of a dropped packet based on the average size of the packets. Such an average can be computed, for example, as a weighted average of the last n packets, as an average of all packets received, or as an average over packets within the given GoP. In addition, the average could be limited to packets containing data of the same frame type (I, P, or B). The network analyzer can further calculate the average packet loss rate by determing the proportion of packets in the video stream that are dropped.

The network analyzer will keep one or two "frame threshold" values so it can estimate the varying sizes of the I, P, and B-frames. Because 1-frames are so much larger than P and B-frames, those frames with a byte count above a certain threshold ("l-frame threshold") will be classified as 1-frames. Similarly, some embodiments utilize a separate (lower) threshold ("P-frame threshold") to discriminate between P and B-frames because the former are usually significantly larger than the latter. The I and P- frame thresholds can be continuously updated based on the varying sizes of the frames in the video stream.

The network analyzer can also maintain values for the maximum, minimum, and average sizes of I, P, and B-frames, respectively. These values can be continuously updated. For each frame encountered, the network analyzer can compare its size to the average frame size of its type and compute the variance for the given frame. The network analyzer can further maintain average values for the frame variances.

Because each 1-frame begins a new GoP, the network analyzer can further calculate the length of each GoP it observes. The analyzer can also maintain maximum, minimum, average, and variance values for GoP length.

For each GoP, the analyzer can estimate the amount of detail, motion, or panning present in the GoP. Similarly, the analyzer can estimate if there has been a scene change from the prior GoP to the current GoP. The analyzer can accomplish this by comparing the frame sizes and GoP length to the various maxima, minima, and averages described above.

For instance, an 1-frame that is relatively large in comparison to other I- frames in the video sequence indicates a high level of detail in the GoP of which it is a part. If a GoP contains P or B-frames that are relatively large, then the GoP is exhibiting a large amount of motion. Panning in a video sequence can be detected by the relatively more frequent transmission of 1-frames. A scene change is indicated when an 1-frame is sent in the middle of a normal GoP and effectively restarts the GoP.

After calculating these various metrics, the network analyzer could use them as inputs to a video quality estimation algorithm. Such an algorithm could calculate the estimated peak signal to noise ratio (PSNR) and deliver a mean opinion score (MOS).

**Claims**

1. Method for temporally synchronizing the encrypted input bit stream of a video decoder with the processed video sequence (PVS)
   obtained by an external video decoder, the method comprising the steps of:

   a) supplying the encrypted input bit stream to an analysis module;
   b) analysing, in the analysis module, the packet header information of the encrypted input bit stream, and calculating the size and the type of the pictures contained in the bit stream;
   c) extracting, on the basis on the calculated picture sizes and types, features that are representative of the content depicted in the video pictures;
   d) extracting the type of content and respective features representative of the content from the pictures of the processed video sequence;
   e) comparing the features extracted in step d) from the current picture of the processed video sequence with the features extracted in step c) from the analysed pictures to compute the part of the bit stream that corresponds to the current PVS.

2. The method of claim 1, wherein the features extracted in steps c) and d) are time-varying features.

3. The method of claim 1, or 2, wherein the part of the bit stream which corresponds to the current PVS is further input to a video quality assessment module.

4. The method of claim 1, wherein step b) further detects frames that have been affected by the packet loss, and further comprises the steps of:

   f) examining the current picture of the video sequence generated by the external video decoder for artefacts generated due to packet losses; and
   g) matching of the processed video sequence with the corresponding frame of the bit stream, wherein, if the current picture of the processed video sequence was detected in step f) to contain artefacts that were inserted as a result of a packet loss, then that picture is matched with the part of the bit stream corresponding to the frame which was found in step b) to contain the packet loss.

5. Apparatus for temporally synchronizing the encrypted input bit stream of a video decoder with the processed video sequence decoded by an external video decoder, the apparatus comprising:

   a bit stream analyzer receiving the encrypted input bit stream, the bit stream analyzer being configured for parsing and analyzing the input bit stream, and
   a synchronization module being configured for synchronizing the analyzed bit stream with the processed video sequence,
   **characterized in that**
   the synchronization module comprises
   a first extraction module being configured for extracting, on the basis on the calculated frame sizes and types, features that are representative of the content depicted in the video frames,
   a second extraction module being configured for extracting the type of content and respective features representative of the content from the pictures of the processed video sequence, and
   a comparison unit connected to the first extraction unit and the second extraction unit, the comparison unit being configured to

compare the features extracted from the current picture of the processed video sequence with the features extracted from the analysed frames, and to
determine the matching frame $n^*$.

**Patentansprüche**

1. Verfahren zur zeitlichen Synchronisation des verschlüsselten Eingangsbitstroms eines Videodekoders mit der von einem externen Videodekoder erhaltenen verarbeiteten Videosequenz (PVS, Processed Video Sequence), wobei das Verfahren die folgenden Schritte aufweist:

   a) Zuführen des verschlüsselten Eingangsbitstroms zu einem Analysemodul,
   b) Analyse der Paketkopfinformation des verschlüsselten Eingangsbitstroms und Berechnen der Grösse und der Art der in dem Bitstrom enthaltenen Bilder in dem Analysemodul,
   c) Extrahieren von Merkmalen, die für den in den Videobildern gezeigten Inhalt repräsentativ sind, auf Grundlage der berechneten Bildgrößen und -arten,
   d) Extrahieren der Art des Inhalts und der entsprechenden für den Inhalt repräsentativen Merkmale aus den Bildern der verarbeiteten Videosequenz,
   e) Vergleichen der in Schritt d) aus dem aktuellen Bild der verarbeiteten Videosequenz extrahierten Merkmale mit den in Schritt c) aus den analysierten Bildern extrahierten Merkmalen zur Berechnung des Teils des Bitstroms, der der aktuellen PVS entspricht.

2. Verfahren nach Anspruch 1, wobei die in den Schritten c) und d) extrahierten Merkmale zeitabhängige Merkmale sind.

3. Verfahren nach Anspruch 1 oder 2, wobei der Teil des Bitstroms, der der aktuellen PVS entspricht, ferner in ein Videoqualitätsbewertungsmodul eingegeben wird.

4. Verfahren nach Anspruch 1, wobei Schritt b) ferner die Rahmen, die durch den Paketverlust betroffen sind, erfasst, und außerdem die folgenden Schritte umfasst:

   f) Untersuchen des aktuellen Bildes der durch den externen Videodekoder generierten Videosequenz auf Artefakte, die aufgrund von Paketverlusten entstanden sind, und
   g) Abgleich der verarbeiteten Videosequenz mit dem entsprechenden Rahmen des Bitstroms, wobei, wenn in Schritt f) entdeckt wurde, dass das aktuelle Bild der verarbeiteten Videosequenz Artefakte enthält, die aufgrund eines Paketverlusts eingefügt worden sind, dann wird das Bild mit dem Teil des Bitstroms abgeglichen, der dem Rahmen entspricht, bei dem im Schritt b) gefunden wurde, dass er den Paketverlust enthält.

5. Vorrichtung zur zeitlichen Synchronisation des verschlüsselten Eingangsbitstroms eines Videodekoders mit der von einem externen Videodekoder erhaltenen verarbeiteten Videosequenz, mit:

   einem den verschlüsselten Eingangsbitstrom empfangenden Bitstrom-Analysator, der zum Parsen und Analysieren des Eingangsbitstroms konfiguriert ist, und
   einem Synchronisationsmodul, das zum Synchronisieren des analysierten Bitstroms mit der verarbeiteten Videosequenz konfiguriert ist,
   **dadurch gekennzeichnet, dass**
   das Synchronisationsmodul aufweist:

   ein erstes Extraktionsmodul, das konfiguriert ist, Merkmale, die für den in den Videorahmen gezeigten Inhalt repräsentativ sind, auf der Grundlage der berechneten Rahmengrößen und -arten zu extrahieren,
   ein zweites Extraktionsmodul, das konfiguriert ist, die Art des Inhalts und entsprechende Merkmale, die für den Inhalt der Bilder der verarbeiteten Videosequenz repräsentativ sind, zu extrahieren, und
   eine mit der ersten Extraktionseinheit und der zweiten Extraktionseinheit verbundene Vergleichseinheit, die dafür konfiguriert ist,
   die aus dem aktuellen Bild der verarbeiteten Videosequenz extrahierten Merkmale mit den aus den analysierten Rahmen extrahierten Merkmalen zu vergleichen, und
   den passenden Rahmen $n^*$ zu bestimmen.

**EP 2 413 612 B1**

**Revendications**

1. Procédé de synchronisation temporelle du train de bits d'entrée crypté d'un décodeur vidéo avec la séquence vidéo traitée obtenue par un décodeur vidéo externe, ledit procédé comprenant les étapes suivantes :

   a) transfert du train de bits d'entrée crypté à un module d'analyse;
   b) analyse dans le module d'analyse, de l'information d'en-tête de paquet du train de bits d'entrée crypté, et calcul de la taille et du type des images contenues dans le train de bits ;
   c) extraction, sur la base des tailles et types d'images calculés, de caractéristiques représentatives du contenu des images vidéos ;
   d) extraction du type de contenu et de caractéristiques respectives représentatives du contenu des images de la séquence vidéo traitée;
   e) comparaison des caractéristiques extraites en étape d) de l'image active de la séquence vidéo traitée avec les caractéristiques extraites en étape c) des images analysées pour calculer la partie du train de bits correspondant à la séquence vidéo traitée actuelle.

2. Procédé selon la revendication 1, où les caractéristiques extraites en étapes c) et d) sont des caractéristiques variables dans le temps.

3. Procédé selon la revendication 1 ou la revendication 2, où la partie du train de bits correspondant à la séquence vidéo traitée actuelle est en outre entrée dans un module d'évaluation de qualité vidéo.

4. Procédé selon la revendication 1, où l'étape b) détecte en outre les trames affectées par la perte de paquets, et comprenant en outre les étapes suivantes :

   f) examen de l'image actuelle de la séquence vidéo generée par le décodeur vidéo externe pour rechercher les artefacts générés en raison des pertes de paquets ; et
   g) mise en adéquation de la séquence vidéo traitée avec la trame correspondante du train de bits, où, s'il a été détecté en étape f) que l'image actuelle de la séquence vidéo traitée contenait des artefacts introduits suite à une perte de paquets, ladite image est mise en adéquation avec la partie du train de bits correspondant à la trame qui en étape b) a été déterminée contenir la perte de paquets.

5. Dispositif pour l'alignement temporaire du train de bits d'entrée crypté d'un décodeur vidéo avec la séquence vidéo traitée décodée par un décodeur vidéo externe, ledit dispositif comprenant :

   un analyseur de train de bits recevant le train de bits d'entrée crypté, ledit analyseur de train de bits étant prévu pour effectuer un parsing et une analyse du train de bits d'entrée, et
   un module de synchronisation prévu pour aligner le train de bits aligné avec la séquence vidéo traitée,
   **caractérisé**
   **en ce que** le module de synchronisation comprend
   un premier module d'extraction prévu pour l'extraction, sur la base des tailles et types de trames calculés, de caractéristiques représentatives du contenu des images vidéos,
   un deuxième module d'extraction prévu pour l'extraction du type de contenu et de caractéristiques respectives représentatives du contenu des images de la séquence vidéo traitée, et
   une unité de comparaison reliée à la première unité d'extraction unit et à la deuxième unité d'extraction, ladite unité de comparaison étant prévue pour
   comparer les caractéristiques extraites de l'image actuelle de la séquence vidéo traitée aux caractéristiques extraites des trames analysées, et pour
   déterminer la trame correspondante $n^*$.

EP 2 413 612 B1

Video
bitstream → (Decoder) STB → PVS → Display device

Video quality monitoring probe

Bitstream parser/ analyzer

Synchronization of PVS and bitstream

Hybrid video quality assessment

$M\hat{O}S$

**Fig. 1**

Video
bitstream → Decoder (STB) → PVS → Output device

Probe

Packet header analysis

Feature extraction → feature matching ← Feature extraction

Hybrid video quality assessment

$M\hat{O}S$

**Fig. 2**

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6751360 B1
- US 7366361 B2
- US 20080253689 A
- US 20070097266 A
- US 6618077 B1
- WO 2008034632 A1
- US 20030179740 A1
- EP 2413535 A1
- WO 2009012297 A1

**Non-patent literature cited in the description**

- **M. BARKOWSKY ; R. BITTO ; J. BIALKOWSKI ; A. KAUP.** Comparison of matching strategies for temporal frame registration in the perceptual evaluation of video quality. *Proc. of the Second International Workshop on Video Processing and Quality Metrics for Consumer Electronics,* January 2006
- **Y. Y. LEE ; C. S. KIM ; S. U. LEE.** Video frame-matching algorithm using dynamic programming. *Journal of Electronic Imaging, SPIE,* 2009
- **G. VALENZISE.** Estimating channel-induced distortion in H.264/AVC video without bitstream information. *QoMEX,* 2010